# EUROPEAN PATENT APPLICATION

(11) **EP 4 653 670 A1**
(43) Date of publication of application: **26.11.2025**
(21) Application number: 25176148.2
(22) Date of filing: 13.05.2025
(51) Int. Cl.: F01D 25/12, F01D 5/08, F01D 25/16

(54) **FUEL COOLED AFT BEARING SYSTEM FOR AN ATTRITABLE GAS TURBINE ENGINE**

(30) Priority: 21.05.2024 US 202418669703
(71) Applicant: RTX Corporation, Farmington, CT 06032 (US)
(72) Inventor: Binek, Lawrence A, Glastonbury, 06033 (US); Snyder, Timothy S, Glastonbury, 06033 (US); Bugin, Yoel, Port St. Lucie, 34983 (US)
(74) Representative: Schmitt-Nilson Schraud Waibel Wohlfrom Patentanwälte Partnerschaft mbB

(57) **Abstract**

A fuel cooled aft bearing system including a main shaft supporting a compressor proximate a forward portion and a turbine proximate an aft portion; the main shaft comprising a shaft flow passage fluidly coupled with a fuel manifold proximate the aft portion and the shaft flow passage fluidly coupled with a combustor supply tube fluidly coupled with a combustor, the combustor in operative communication with the compressor and the turbine; an aft bearing supporting the main shaft proximate the aft portion; the aft bearing fluidly coupled with the fuel manifold of the main shaft; a strut in operative communication with the aft bearing, the strut comprising a strut flow passage fluidly coupled with the aft bearing; a vane in operative communication with the strut, the vane comprising a vane flow passage fluidly coupled with the strut flow passage; and a fuel supply fluidly coupled with the vane flow passage.

## Description

The present disclosure is directed to the improved fuel cooled aft bearing for attritable gas turbine engines.

Attritable engine systems, by definition are expendable and life limited. As such, design spaces can be enabled using additive manufacturing. By implementing additive manufacturing advantages such as unitization, it is possible to develop a low-part count, single build engine within the additive manufacturing process envelope coupled with minimal post processing. This can significantly increase the value for attritable engine systems and enable an expanded design space for conventional engine systems.

In accordance with the present disclosure, there is provided a fuel cooled aft bearing system comprising a main shaft supporting a compressor proximate a forward portion and the main shaft supporting a turbine proximate an aft portion; the main shaft comprising a shaft flow passage fluidly coupled with a fuel manifold proximate the aft portion and the shaft flow passage fluidly coupled with a combustor supply tube fluidly coupled with a combustor, the combustor in operative communication with the compressor and the turbine; an aft bearing supporting the main shaft proximate the aft portion; the aft bearing fluidly coupled with the fuel manifold of the main shaft; a strut in operative communication with the aft bearing, the strut comprising a strut flow passage fluidly coupled with the aft bearing; a vane in operative communication with the strut, the vane comprising a vane flow passage fluidly coupled with the strut flow passage; and a fuel supply fluidly coupled with the vane flow passage.

Particular embodiments further may include at least one, or a plurality of, the following optional features, alone or in combination with each other:

A further embodiment of any of the foregoing embodiments may additionally and/or alternatively include the aft bearing comprises a bearing seat having a crucible which is partially sealed with the main shaft.

A further embodiment of any of the foregoing embodiments may additionally and/or alternatively include the aft bearing comprises a bearing seat gap formed between the bearing seat and a bearing block.

A further embodiment of any of the foregoing embodiments may additionally and/or alternatively include the bearing block comprises a bearing cooling channel.

A further embodiment of any of the foregoing embodiments may additionally and/or alternatively include the vane flow passage comprises an annular insulation region surrounding the vane flow passage, the annular insulation region configured to reduce heat transfer from a vane flow passage exterior into a fuel within the vane flow passage.

A further embodiment of any of the foregoing embodiments may additionally and/or alternatively include the fuel cooled aft bearing system further comprising a pump section proximate to the main shaft, the pump section configured to propel a fuel through the main shaft from the aft bearing.

A further embodiment of any of the foregoing embodiments may additionally and/or alternatively include the fuel cooled aft bearing system further comprising a knife edge seal formed on the main shaft proximate the bearing seat, the knife edge seal configured to seal a fuel near the aft bearing.

In accordance with the present disclosure, there is provided an attritable gas turbine engine with a fuel cooled aft bearing comprising a main shaft supporting a compressor proximate a forward portion of the gas turbine engine, the main shaft supporting a turbine proximate an aft portion of the gas turbine engine; the main shaft comprising a shaft flow passage fluidly coupled with a fuel manifold proximate the aft portion of the gas turbine engine and the shaft flow passage fluidly coupled with a combustor supply tube fluidly coupled with a combustor, the combustor in operative communication with the compressor and the turbine; an aft bearing supporting the main shaft proximate the aft portion of the gas turbine engine; the aft bearing fluidly coupled with the fuel manifold of the main shaft; a strut in operative communication with the aft bearing, the strut comprising a strut flow passage fluidly coupled with the aft bearing; a vane in operative communication with the strut, the vane comprising a vane flow passage fluidly coupled with the strut flow passage; and a fuel supply fluidly coupled with the vane flow passage.

Particular embodiments further may include at least one, or a plurality of, the following optional features, alone or in combination with each other:

A further embodiment of any of the foregoing embodiments may additionally and/or alternatively include the aft bearing comprises a bearing seat having a crucible which is partially sealed with the main shaft.

A further embodiment of any of the foregoing embodiments may additionally and/or alternatively include the vane flow passage comprises an annular insulation region surrounding the vane flow passage, the annular insulation region configured to reduce heat transfer from a vane flow passage exterior into a fuel within the vane flow passage.

A further embodiment of any of the foregoing embodiments may additionally and/or alternatively include the attritable gas turbine engine with a fuel cooled aft bearing further comprising a pump section attached to the main shaft, the pump section configured to propel a fuel through the main shaft from the aft bearing.

A further embodiment of any of the foregoing embodiments may additionally and/or alternatively include the attritable gas turbine engine with a fuel cooled aft bearing further comprising a knife edge seal formed on the main shaft proximate the bearing seat, the knife edge seal configured to seal a fuel near the aft bearing.

A further embodiment of any of the foregoing embodiments may additionally and/or alternatively include the aft bearing comprises a bearing seat gap formed between the bearing seat and a bearing block, wherein the bearing block comprises a bearing cooling channel.

In accordance with the present disclosure, there is provided a process for an attritable gas turbine engine with a fuel cooled aft bearing comprising supporting a compressor with a main shaft proximate a forward portion of the gas turbine engine; supporting a turbine with the main shaft proximate an aft portion of the gas turbine engine; fluidly coupling a shaft flow passage within the main shaft with a fuel manifold in the main shaft proximate the aft portion of the gas turbine engine; fluidly coupling the shaft flow passage with a combustor supply tube within the main shaft; fluidly coupling the combustor supply tube with a combustor, the combustor in operative communication with the compressor and the turbine; supporting the main shaft with an aft bearing proximate the aft portion of the gas turbine engine; fluidly coupling the aft bearing with the fuel manifold of the main shaft; coupling a strut in operative communication with the aft bearing, the strut comprising a strut flow passage fluidly coupled with the aft bearing; coupling a vane in operative communication with the strut, the vane comprising a vane flow passage fluidly coupled with the strut flow passage; and fluidly coupling a fuel supply with the vane flow passage.

Particular embodiments further may include at least one, or a plurality of, the following optional features, alone or in combination with each other:

A further embodiment of any of the foregoing embodiments may additionally and/or alternatively include the vane flow passage comprises an annular insulation region surrounding the vane flow passage, the annular insulation region configured to reduce heat transfer from a vane flow passage exterior into a fuel within the vane flow passage.

A further embodiment of any of the foregoing embodiments may additionally and/or alternatively include the process further comprising attaching a pump section to the main shaft; and configuring the pump section to propel a fuel through the main shaft from the aft bearing.

A further embodiment of any of the foregoing embodiments may additionally and/or alternatively include the process further comprising forming a knife edge seal on the main shaft proximate the bearing seat; and configuring the knife edge seal to seal a fuel near the aft bearing.

A further embodiment of any of the foregoing embodiments may additionally and/or alternatively include the aft bearing comprises a bearing seat gap formed between the bearing seat and a bearing block.

A further embodiment of any of the foregoing embodiments may additionally and/or alternatively include the bearing block comprises a bearing cooling channel.

Other details of the fuel cooled aft bearing are set forth in the following detailed description and the accompanying drawings wherein like reference numerals depict like elements.
Fig. 1 is a schematic representation of an exemplary attritable gas turbine engine with integrated fuel cooled aft bearings.
Fig. 2 is a schematic representation of exemplary integrated fuel cooled aft bearings.
Fig. 3 is a cross section view schematic representation of an exemplary vane with a fuel flow channel.

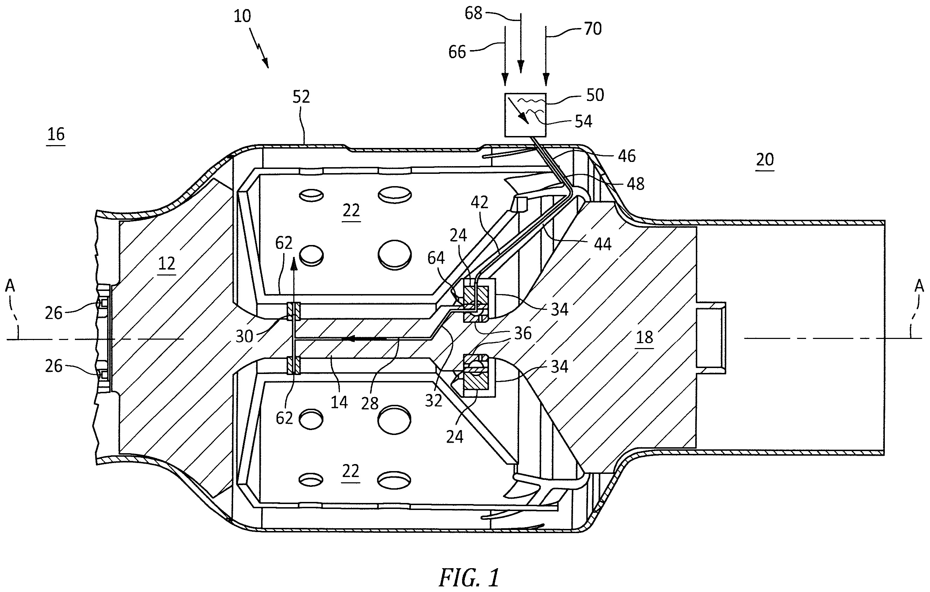

Referring now to Fig. 1, there is illustrated an exemplary gas turbine engine 10. The gas turbine engine 10 can be an attritable engine designed for limited use or even one-time use. The gas turbine engine 10 includes a compressor 12 mounted to a main shaft 14 proximate a forward portion 16 of the gas turbine engine 10. The main shaft 14 is rotatable about an axis A. The main shaft 14 is coupled with a turbine 18 proximate an aft portion 20 of the gas turbine engine 10. The gas turbine engine 10 includes a combustor 22 in operative communication with the compressor 12 and the turbine 18. The combustor 22 is shown located between the compressor 12 and the turbine 18.

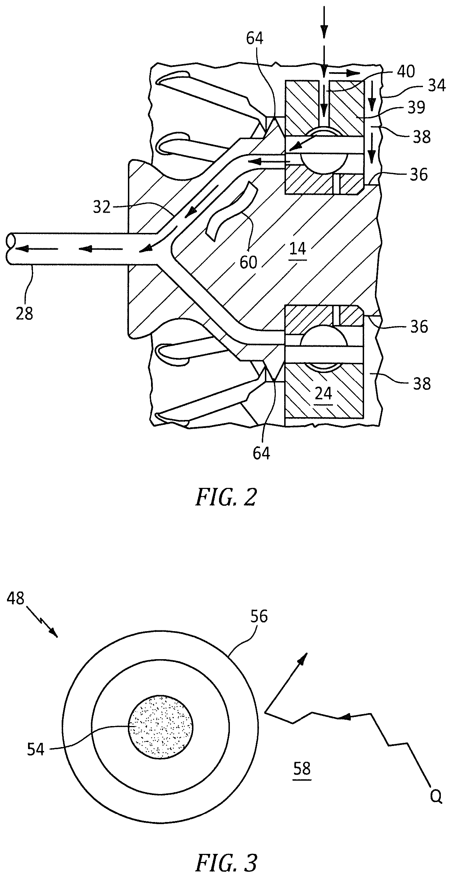

Also referring to Fig. 2, the main shaft 14 is supported by aft bearing(s) 24. The aft bearings 24 can be located between the compressor 12 and the turbine 18. The main shaft is also supported by forward bearings 26. The forward bearings 26 can be located forward of the compressor 12.

The main shaft 14 includes a shaft flow passage 28 formed through the main shaft 14 and extending between a combustor supply tube 30 formed in the main shaft 14 and a fuel manifold 32 formed in the main shaft 14. The combustor supply tube 30 is fluidly coupled with the shaft flow passage 28 and the combustor 22. The shaft flow passage 28 is fluidly coupled with the fuel manifold 32.

The gas turbine engine 10 includes a bearing seat 34 that supports the aft bearing(s) 24. The bearing seat 34 includes a crucible 36 which is partially sealed with the main shaft 14. A bearing seat gap 38 is formed between the bearing seat 34 and aft bearing block 39. A bearing cooling channel 40 can be formed in the aft bearing block 39. The fuel manifold 32 is fluidly coupled with the aft bearing 24.

The gas turbine engine 10 can include a strut 42 coupled to the aft bearing 24. The strut 42 can include a strut flow passage 44 formed along the length of the strut 42. The strut flow passage 44 is in fluid communication with the aft bearing 24.

The gas turbine engine 10 includes a vane 46 coupled with the strut 42. The vane 46 includes a vane flow passage 48. The vane flow passage 48 is in fluid communication with the strut flow passage 44. The vane flow passage 48 is in fluid communication with a fuel supply 50. The fuel supply 50 can be external to an engine case 52. The fuel supply 50 can include fuel 54 that is supplied to the combustor 22 for combustion.

Also referring to Fig. 3, the vane flow passage 48 can include an annular insulation region 56 surrounding the vane flow passage 48. The annular insulation region 56 can include a dead air space, a foam insulation, an inert gas, and the like. The annular insulation region 56 is configured to prevent unwanted thermal energy Q transfer from hot gases exposed to a vane flow passage exterior 58 into the fuel 54 within the vane flow passage 48. The fuel 54 can remain at predetermined temperatures and be protected from unwanted coke formation due to high temperature exposure.

The fuel 54 from the fuel supply 50 can flow through the vane flow passage 48 to the strut flow passage 44. The annular insulation 56 prevents fuel 54 from overheating while traversing the vane 46. The fuel 54 can pass through the strut flow passage 44 into the aft bearing 24. The fuel 54 can pass through the bearing cooling channel 40 to provide cooling, that is, thermal energy transfer from the bearing 24 into the relatively cooler fuel 54. The fuel can also pass into the bearing seal gap 38 and flow around the bearing 24, additionally providing thermal energy transfer from the relatively hotter bearing 24 into the relatively cooler fuel 54. The fuel 54 can pass from the bearing 24 into the fuel manifold 32 of the main shaft 14. The fuel 54 gains thermal energy that is beneficial for the fuel 54 upon entry into the combustor 22.

The main shaft 14 can include a pump section 60 such as an impeller proximate to the main shaft 14 configured to propel the fuel 54 through the main shaft 14 from the bearing 24. The pump section 60 can be integrated with the main shaft 14. The rotary motion of the main shaft 14 can create fluid flow forces through the impeller 60 that influences the fuel 54 flow. The fuel 54 can flow from the fuel manifold 32 into the shaft flow passage 28 in the direction from the aft portion towards the forward portion. The fuel 54 can flow from the shaft flow passage 28 into the combustor supply tube 30. The combustor supply tube 30 can be fluidly coupled with an exit orifice array 62 of the combustor 22. The fuel 54 can flow into the combustor 22 from the combustor supply tube 30 for use in the combustor 22.

A knife edge seal 64 formed on the main shaft 14 proximate the bearing seat 34 is configured to seal the fuel 54 from leaking near the bearing seat 34. Any fuel 54 passing near the knife edge seal 64 can be fluidly coupled with the fuel 54 flowing into the fuel manifold 32 and avoid unwanted leakage.

In addition to or in substitute for the impeller 60, the fuel 54 can be driven to flow from the fuel supply 50 to the combustor 22 via bleed air 66 taken from the compressor 12 or combustor 22. In an alternative embodiment, a ram air 68 source of air pressure can be employed to impel the fuel 54 from the fuel supply 50 to the combustor 22. A venturi device 70 can be employed to create suction to impel the fuel 54 to the combustor 22.

A technical advantage of the disclosed fuel cooled aft bearing can include a configuration that allows for fuel to travel through static and dynamic components passively without the need for additional hardware.

Another technical advantage of the disclosed fuel cooled aft bearing can include a system in which the fuel assists in hot section cooling and combustion will be supported with heated fuel.

Another technical advantage of the disclosed fuel cooled aft bearing can include a system in which the aft bearing can be cooled in a hot environment with minimal impact to cost.

Another technical advantage of the disclosed fuel cooled aft bearing can include the conceptualized configuration leverages Additive Manufacturing from a producibility perspective and is attuned to minimizing mechanical post processing.

There has been provided a fuel cooled aft bearing. While the fuel cooled aft bearing has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A fuel cooled aft bearing system comprising:
a main shaft supporting a compressor proximate a forward portion and the main shaft supporting a turbine proximate an aft portion; the main shaft comprising a shaft flow passage fluidly coupled with a fuel manifold proximate the aft portion and the shaft flow passage fluidly coupled with a combustor supply tube fluidly coupled with a combustor, the combustor in operative communication with the compressor and the turbine;
an aft bearing supporting the main shaft proximate the aft portion; the aft bearing fluidly coupled with the fuel manifold of the main shaft;
a strut in operative communication with the aft bearing, the strut comprising a strut flow passage fluidly coupled with the aft bearing;
a vane in operative communication with the strut, the vane comprising a vane flow passage fluidly coupled with the strut flow passage; and
a fuel supply fluidly coupled with the vane flow passage.

2. The fuel cooled aft bearing system according to claim 1, wherein the aft bearing comprises a bearing seat having a crucible which is partially sealed with the main shaft.

3. The fuel cooled aft bearing system according to claim 2, wherein the aft bearing comprises a bearing seat gap formed between the bearing seat and a bearing block.

4. The fuel cooled aft bearing system according to claim 3, wherein the bearing block comprises a bearing cooling channel.

5. The fuel cooled aft bearing system according to any of claims 1 to 4, wherein the vane flow passage comprises an annular insulation region surrounding the vane flow passage, the annular insulation region configured to reduce heat transfer from a vane flow passage exterior into a fuel within the vane flow passage.

6. The fuel cooled aft bearing system according to any of claims 1 to 5, further comprising:
a pump section proximate to the main shaft, the pump section configured to propel a fuel through the main shaft from the aft bearing.

7. The fuel cooled aft bearing system according to any of claims 1 to 6, further comprising:
a knife edge seal formed on the main shaft proximate the bearing seat, the knife edge seal configured to seal a fuel near the aft bearing.

8. A gas turbine engine with a fuel cooled aft bearing system according to any of claims 1 to 7.

9. A process for a gas turbine engine with a fuel cooled aft bearing comprising:
supporting a compressor with a main shaft proximate a forward portion of the gas turbine engine;
supporting a turbine with the main shaft proximate an aft portion of the gas turbine engine;
fluidly coupling a shaft flow passage within the main shaft with a fuel manifold in the main shaft proximate the aft portion of the gas turbine engine;
fluidly coupling the shaft flow passage with a combustor supply tube within the main shaft;
fluidly coupling the combustor supply tube with a combustor, the combustor in operative communication with the compressor and the turbine;
supporting the main shaft with an aft bearing proximate the aft portion of the gas turbine engine;
fluidly coupling the aft bearing with the fuel manifold of the main shaft;
coupling a strut in operative communication with the aft bearing, the strut comprising a strut flow passage fluidly coupled with the aft bearing;
coupling a vane in operative communication with the strut, the vane comprising a vane flow passage fluidly coupled with the strut flow passage; and
fluidly coupling a fuel supply with the vane flow passage.

10. The process of claim 9, wherein the vane flow passage comprises an annular insulation region surrounding the vane flow passage, the annular insulation region configured to reduce heat transfer from a vane flow passage exterior into a fuel within the vane flow passage.

11. The process of claim 9 or 10, further comprising:
attaching a pump section proximate to the main shaft; and
configuring the pump section to propel a fuel through the main shaft from the aft bearing.

12. The process of any of claims 9 to 11, further comprising:
forming a knife edge seal on the main shaft proximate the bearing seat; and
configuring the knife edge seal to seal a fuel near the aft bearing.

13. The process of any of claims 9 to 12, wherein the aft bearing comprises a bearing seat gap formed between the bearing seat and a bearing block.

14. The process of any of claims 9 to 13, wherein the bearing block comprises a bearing cooling channel.

15. The process of any of claims 9 to 14, wherein the aft bearing comprises a bearing seat having a crucible which is partially sealed with the main shaft.
